# EUROPÄISCHE PATENTSCHRIFT

(11) **EP 4 365 530 B1**
(45) Veröffentlichungstag und Bekanntmachung des Hinweises auf die Patenterteilung: **13.08.2025**
(21) Anmeldenummer: 22205137.7
(22) Anmeldetag: 02.11.2022
(51) Int. Cl.: F28D 1/06, F17C 1/00, F28D 9/00, F28D 20/02, H01M 10/34, F28D 20/00

(54) **SPEICHERVORRICHTUNG**
MEMORY DEVICE
DISPOSITIF DE STOCKAGE

(43) Veröffentlichungstag der Anmeldung: 08.05.2024
(73) Patentinhaber: Stühff Maschinen- und Anlagenbau GmbH, 21502 Geesthacht (DE)
(72) Erfinder: Stühff, Holger Hans, 21502 Geesthacht (DE); Stühff, Thorbjørn, 21502 Geesthacht (DE)
(74) Vertreter: Patentanwälte Hemmer Lindfeld Frese Partnerschaft mbB

(56) Entgegenhaltungen:
- WO-A1-2017/216148
- WO-A1-2022/198250
- DE-B3- 102016 110 062
- FR-A1- 3 061 766
- GB-A- 2 489 011
- US-A1- 2019 077 227

## Beschreibung

Die Erfindung betrifft eine Speichervorrichtung, welche zum Speichern von Energie in Form von Wärme und/oder von Wasserstoff ausgebildet ist.

Es ist bekannt, Wärmeenergie in einem Wärmespeicher, wie z.B. einem Latentwärmespeicher zu speichern. Ferner ist es möglich, Wasserstoff in Metallhydridspeichern zu speichern. Im Falle von Wärmespeichern sind Speicherbehälter vorgesehen, welche z.B. mit einem Latentwärmespeichermaterial gefüllt sind, welches über einen Wärmeträger erwärmt werden kann und die Wärme umgekehrt wieder an den Wärmeträger abgeben kann. Metallhydrid-Wasserstoffspeicher weisen in einem Speicherbehälter ein Metallhydrid auf, in welchem Wasserstoff gebunden wird. Bei der Bindung von Wasserstoff wird Wärme frei, wohingegen zum Lösen des Wasserstoffes Wärme zugeführt werden muss. Hierzu kann ein geeigneter Wärmeträger verwendet werden.

GB 2489011 A offenbart einen Wärmespeicher, gemäß dem Oberbegriff von Anspruch 1, bei dem Kanäle für ein Wärmeträgermedium stationär angeordnet sind und Wärmespeicherplatten zwischen diese Kanäle eingeschoben sind.

Es ist Aufgabe der Erfindung, eine modulare Speichervorrichtung bereitzustellen, welche kostengünstig zu fertigen und in ihre Größe und ihrem Speichervolumen leicht anpassbar ist.

Diese Aufgabe wird gelöst durch eine Speichervorrichtung mit den in Anspruch 1 angegebenen Merkmalen. Bevorzugte Ausführungsformen ergeben sich aus den Unteransprüchen, der nachfolgenden Beschreibung sowie den beigefügten Figuren.

Die erfindungsgemäße Speichervorrichtung ist modular aufgebaut, d.h. aus mehreren Speichermodulen zusammengesetzt. Die Speichermodule sind aneinander gestapelt, sodass sie aufeinander liegend oder nebeneinander stehend angeordnet sind. Die Speichermodule sind dabei im Wesentlichen unabhängig voneinander ausgebildet, d.h. weisen insbesondere jeweils ein geschlossenes Speichervolumen auf. Vorzugsweise sind die Speichermodule auch im aneinander gestapelten Zustand derart voneinander getrennt, dass im Bereich ihrer Anlagenflächen keinerlei Fluidverbindungen zwischen den einzelnen Speichermodulen vorgesehen sind. Dies erleichtert den Zusammenbau, da zwischen den Speichermodulen keine Abdichtungen erforderlich sind. Der modularer Aufbau hat insbesondere den Vorteil, dass sich die Zahl der Speichermodule in einer Speichervorrichtung leicht variieren lässt, sodass kostengünstig Speichervorrichtungen unterschiedlicher Größe aus standardisierten Modulen aufgebaut werden können.

Die Speichermodule weisen jeweils zumindest einen Speicherbehälter auf. Der Speicherbehälter ist dabei ein im Wesentlichen geschlossener Behälter, dessen erforderlichen Wandungen Teil des zugehörigen Speichermoduls sind. D.h. jeder Speicherbehälter ist vollständig Teil eines einzelnen Speichermoduls und bildet in dem einzelnen Speichermodul ein abgeschlossenes Volumen. Die Speichermodule weisen darüber hinaus jeweils zumindest einen Wärmeträgerkanal auf, welcher an einer Außenwandung des Speicherbehälters angrenzt. So kann ein durch den Wärmeträgerkanal strömender Wärmeträger, insbesondere ein flüssiger Wärmeträger, den Speicherbehälter temperieren, d.h. erwärmen oder kühlen, je nach Anwendung. Der Wärmeträgerkanal ist dabei bevorzugt so angeordnet, dass ein guter Wärmeübergang zwischen einem Wärmeträger im Inneren des Wärmeträgerkanals und der Außenwandung des Speicherbehälters realisiert wird. Bevorzugt fließt der Wärmeträger direkt über die Außenwandung des Speicherbehälters oder der Wärmeträgerkanal ist in geeigneter Weise wärmeleitend mit der Außenwandung des Speicherbehälters verbunden. Die Wärmeträgerkanäle der mehreren Speichermodule sind miteinander verbunden. Dazu ist zumindest eine Wärmeträger-Anschlussleitung vorgesehen, welche mit den Wärmeträgerkanälen der einzelnen Speichermodule in Verbindung steht bzw. an diese fluidleitend angeschlossen ist. Die Wärmeträger-Anschlussleitung ist dabei separat zu den Wärmeträgermodulen ausgebildet, sodass diese nicht direkt untereinander fluidleitend verbunden werden müssen, sondern die Wärmeträgerkanäle der einzelnen Speichermodule über die zumindest eine separate Wärmeträger-Anschlussleitung untereinander und darüber hinaus mit einer Wärmequelle und/oder Kühleinrichtung verbunden werden. In der zumindest einen Wärmeträger-Anschlussleitung und/oder in deren Verbindung zu den Wärmeträgerkanälen können Ventile angeordnet sein, welche es ermöglichen, einen Wärmeträgerfluss einzustellen bzw. zu regulieren.

Die zumindest eine Wärmeträger-Anschlussleitung ist bevorzugt als eine zu den Speichermodulen externe Verrohrung ausgebildet. Die Wärmeträger-Anschlussleitung ist dabei bevorzugt so ausgebildet, dass sie mit den Speichermodulen verbunden wird, nachdem diese aneinander gestapelt und aneinander fixiert sind. Die Speichermodule können dazu geeignete Anschlüsse, beispielsweise Anschlussstutzen aufweisen, an welche eine solche externe Verrohrung angeschlossen werden kann. Die Wärmeträger-Anschlussleitung verbindet die Wärmeträgerkanäle der Speichermodule miteinander und mit externen Komponenten. Die Speichermodule können so ausgebildet sein, dass deren Wärmeträgerkanäle jeweils zwei Anschlüsse, vorzugsweise einen Einlass und einen Auslass aufweisen, wobei dann beispielsweise die Einlässe mit einer Wärmeträger-Einlassleitung und die Auslässe mit einer Wärmeträger-Auslassleitung verbunden werden können. Auf diese Weise werden die Wärmeträgerkanäle der einzelnen Speichermodule parallelgeschaltet. Es sind jedoch auch andere Verbindungen bzw. Verschaltungen möglich, sodass die Wärmeträgerkanäle beispielsweise mit abwechselnd entgegengesetzt gerichteten Strömungsrichtungen oder mit einer insgesamt mäanderförmigen Strömungsrichtung durchströmt werden.

Die Speicherbehälter der Speichermodule weisen jeweils eine Außenwandung auf, welche gemäß einer möglichen Ausführungsform eine erste Wandfläche und eine beabstandete, sich parallel erstreckende zweite Wandfläche aufweist. Im Randbereich können diese erste und die zweite Wandfläche über eine Umfangswandung dicht miteinander verbunden sein. Die erste und die zweite Wandfläche und die genannte Umfangswandung definieren dann das Volumen des Speicherbehälters. Der zumindest eine Wärmeträgerkanal grenzt vorzugsweise an diese erste und/oder an die zweite Wandfläche an. So wird ein guter Wärmeübergang von dem Wärmeträgerkanal bzw. einem in diesem strömenden Wärmeträger auf die angrenzende Wandfläche realisiert. Über die Wandfläche kann Wärme in das Innere des Speicherbehälters eingetragen oder aus dem Inneren des Speicherbehälters abgeführt werden.

Gemäß einer weiteren bevorzugten Ausführungsform weisen die Speicherbehälter jeweils einen ersten Wärmeträgerkanal, der an die erste Wandfläche angrenzt, und einen zweiten Wärmeträgerkanal, der an die zweite Wandfläche angrenzt, auf. Auf diese Weise wird der Speicherbehälter an zwei entgegengesetzten Seiten von dem Wärmeträger, welcher durch die Wärmeträgerkanäle strömt, temperiert. So kann eine großflächige und gleichmäßige Temperierung erreicht werden.

Gemäß einer weiteren Ausführungsform der Erfindung erstreckt sich der zumindest eine Wärmeträgerkanal flächig entlang zumindest einer Wandfläche der Außenwandung des zugehörigen Speicherbehälters. So kann ein Wärmeträger in dem Wärmeträgerkanal eine größere Fläche des Speicherbehälters überströmen. Bevorzugt sind derartige Wärmeträgerkanäle an zwei Wandflächen, d.h. einer ersten und einer zweiten Wandfläche, wie sie vorangehend beschrieben wurden, angeordnet,

Die Wärmeträgerkanäle sind jeweils direkt durch eine Wandfläche der Außenwandung des zugehörigen Speicherbehälters begrenzt. Es ist eine mit der Wandfläche verbundene Kanalwandung vorgesehen, welche von der Wandfläche wenigstens in Teilbereichen beabstandet ist, sodass zwischen der Wandfläche des Speicherbehälters und der Kanalwandung ein Freiraum ausgebildet ist, welcher den Wärmeträgerkanal bildet. Die Kanalwandung erstreckt sich bevorzugt zumindest in Teilbereichen parallel zu der Wandfläche der Außenwandung des Speicherbehälters, sodass bevorzugt ein flächiger Wärmeträgerkanal zwischen der Kanalwandung und der Wandfläche ausgebildet wird. Die Kanalwandung ist in ihrem Umfangsbereich mit der Wandfläche verbunden. Darüber hinaus können Verbindungen oder Verbindungsstege auch im Innenbereich vorgesehen sein. Solche Verbindungen können beispielsweise durch entsprechende Formgebung der Kanalwandung geschaffen werden, beispielsweise kann diese Einbuchtungen aufweisen, welche zu der Wandfläche hin gerichtet sind und weiter bevorzugt mit dieser verbunden sind.

Die Kanalwandung ist von einem Blechelement gebildet, welches mit der Wandfläche, welche bevorzugt ebenfalls aus Blech ausgebildet ist, dichtend verbunden ist. Vorzugsweise kann die Kanalwandung mit der Wandfläche verschweißt sein.

Als Materialien kommen sowohl für die Kanalwand als auch die Außenwandung des Speicherbehälters beispielsweise Aluminium oder Aluminiumlegierungen, aber auch Stahl, besonders bevorzugt rostfreier und/oder austenitischer Stahl in Frage.

Die Speicherbehälter der Speichermodule sind vorzugsweise aus Blech, insbesondere Metallblech gefertigt. Auch hier können bevorzugt die vorgenannten Materialien zum Einsatz kommen. Bevorzugt sind zumindest eine Wandfläche der Außenwandung und vorzugsweise die Wandflächen, an welchen die Wärmeträgerkanäle angrenzen, Blechteile. Diese können kostengünstig in die gewünschte Form geschnitten und ggf. durch Umformen in eine gewünschte Form gebracht werden. Metall-Blechteile ermöglichen darüber hinaus einem guten Wärmeübergang von den Wärmeträgerkanälen in das Innere des Speicherbehälters. Die Wandflächen, welche aus Blech ausgebildet sind, sind vorzugsweise über eine Umfangswandung beabstandet zueinander verbunden. Eine solche Umfangswandung kann ebenfalls aus einem oder mehreren Blechteilen gebildet werden und z.B. mit den genannten Wandteilen verschweißt sein. Auch könnte die Umfangswandung einstückig mit den Wandflächen oder zumindest einer der Wandflächen der Außenwandung ausgebildet sein. Die erforderliche dreidimensionale Gestaltung zum Ausbilden eines Hohlraumes im Inneren des Speicherbehälters könnte beispielsweise durch Umformen der Blechteile erreicht werden.

Die einzelnen Speichermodule sind bevorzugt zwischen zwei Lagerelementen aneinander gestapelt, sodass sie durch die beiden Lagerelemente aneinander gedrückt bzw. aneinander gehalten werden. Dabei liegen die einzelnen Speichermodule vorzugsweise derart parallel zueinander, dass sich die beschriebenen Wandflächen mit den Wärmeträgerkanälen der einzelnen Speichermodule parallel zueinander erstrecken. Die Lagerelemente können als Lagerplatten ausgebildet sein. Die beiden Lagerelemente sind an den entgegengesetzten Enden des Modul-Stapels angeordnet und über Spannelemente miteinander verbunden. Die Spannelemente erstrecken sich dabei bevorzugt seitlich der Speichermodule. Die Spannelemente können beispielsweise als Bolzen oder Gewindestangen ausgebildet sein, wobei durch eine Verschraubung der erforderliche Druck zwischen den Lagerelementen und auf die dazwischenliegenden Speichermodule ausgeübt werden kann. Die Spannelemente können sich als Bolzen beispielsweise durch die Lagerelemente hindurcherstrecken und an der den Speichermodulen abgewandten Seiten durch Muttern oder Schrauben fixiert sein. Wenn die Spannelemente als Stangen oder Gewindestangen ausgebildet sind, lassen sie sich leicht in einer gewünschten Länge, welche an eine Anzahl von aufeinander zu stapelnden Speichermodulen angepasst ist, bereitstellen. Dies begünstigt den modularen Aufbau, bei welchem je nach Bedarf unterschiedliche Zahlen von Speichermodulen aneinander gestapelt werden. Die Stangen oder Gewindestangen als Standardteile können leicht auf das gewünschte Maß zugeschnitten werden.

Die einzelnen Speichermodule weisen bevorzugt Tragstrukturen auf, welche insbesondere den Speicherbehälter tragen oder abstützen. Die Tragstrukturen stehen zum Beispiel auf zumindest einer Auflagerfläche, so dass sich jedes Speichermodul direkt auf einer Auflagerfläche abstützt. Die Tragstruktur kann zum Beispiel als ein den Speicherbehälter umgebender Rahmen ausgebildet ein, welcher mit einer Außenwandung des Speicherbehälters kraftübertragend verbunden, z.B. verschweißt ist.

Wenn die Speichervorrichtung als Wärmespeichervorrichtung eingesetzt wird, ist im Inneren des zumindest einen Speicherbehälters zumindest eines Speichermoduls ein Wärmespeichermaterial, insbesondere ein Latentwärmespeichermaterial angeordnet. Dies kann beispielsweise Wachs oder Paraffin sein. Es kann je nach gewünschtem Temperaturniveau jedoch auch jedes andere geeignete Latentwärmespeichermaterial im Inneren der Speicherbehälter angeordnet werden. Nachdem das Latentwärmespeichermaterial in einen Speicherbehälter eingebracht worden ist, wird dieser verschlossen. Zum Einbringen des Materials kann eine Füllöffnung vorgesehen sein, welche nach dem Befüllen verschlossen wird. Dies kann beispielsweise durch einen Stopfen geschehen und als dauerhafter oder lösbarer Verschluss ausgebildet sein. Alternativ kann das Material eingebracht werden, bevor der Speicherbehälter beispielsweise durch Verschweißen eines Wandelementes, wie z.B. einer der genannten Wandflächen oder eines Teils der Umfangswandung, dauerhaft verschlossen wird. Das Latentwärmespeichermaterial ist somit bevorzugt in einem abgeschlossenen Volumen, welches durch den Speicherbehälter definiert wird, angeordnet. Der Wärmeaustausch erfolgt dann allein durch einen Wärmeträger, welcher durch den Wärmeträgerkanal oder die Wärmeträgerkanäle fließt. In diesem Anwendungsfall ist keine Verbindung zwischen den Speicherbehältern bzw. den Innenräumen der Speicherbehälter erforderlich. Die Speichervorrichtung kann eine Vielzahl von derartigen als Wärmespeicher ausgebildete Speichermodule aufweisen.

Wenn die Speichervorrichtung als Wasserstoffspeicher eingesetzt werden soll, ist im Inneren des zumindest einen Speicherbehälters zumindest eines Speichermoduls ein Metallhydrid angeordnet, welches zum Speichern von Wasserstoff ausgebildet bzw. geeignet ist. Hierzu kann grundsätzlich jedes geeignete Metallhydrid zum Einsatz kommen. Um den Wasserstoff in das Innere der Speicherbehälter einbringen und aus diesem wieder nehmen zu können, weisen bei diesem Anwendungsfall die Speicherbehälter entsprechende Anschlüsse bzw. Anschlussöffnungen auf. Der zugeführte Wasserstoff wird in den Speicherbehältern von dem Metallhydrid gebunden, wobei ein Teil des Wasserstoffs gasförmig im Inneren des Speicherbehälters verbleibt. Die Speichervorrichtung kann eine Vielzahl von derartigen als Wasserstoffspeicher ausgebildete Speichermodule aufweisen. Vorzugsweise weisen die Speicherbehälter jeweils zumindest einen Leitungsanschluss auf und die Leitungsanschlüsse der einzelnen Speicherbehälter mehrerer Speichermodule sind vorzugsweise über zumindest eine Speicher-Anschlussleitung miteinander verbunden. Die Speicher-Anschlussleitung ist dabei bevorzugt ebenfalls eine separate Leitungsverbindung, welche außerhalb der Speichermodule erfolgt. D.h. die Speichermodule sind nicht direkt beim Aneinanderstapeln bzw. Anordnen der Speichermodule miteinander verbunden, sodass keine Abdichtungen zwischen den einzelnen Speichermodulen erforderlich sind. Dies vereinfacht die Montage.

Es ist möglich, die erfindungsgemäße Speichervorrichtung mit mehreren Speichermodulen ausschließlich als Wärmespeicher oder ausschließlich als Wasserstoffspeicher auszubilden. Ist die Speichervorrichtung ausschließlich als Wärmespeicher ausgebildet, sind vorzugsweise die Speicherbehälter aller Speichermodule mit einem Wärmespeichermaterial gefüllt. Ist die Speichervorrichtung ausschließlich als Wasserstoffspeicher ausgebildet, sind vorzugsweise die Speicherbehälter aller Speichermodule mit einem Metallhydrid gefüllt. Darüber hinaus ist in einer speziellen Ausgestaltung auch eine Kombination von Wasserstoffspeicher und Wärmespeicher in einer einzigen Speichervorrichtung möglich. Dazu können in einer Speichervorrichtung zumindest ein Speichermodul als Wärmespeicher und zumindest ein Speichermodul als Wasserstoffspeicher ausgebildet sein. Bei einer Vielzahl von Speichermodulen kann somit ein Teil der Speichermodule als Wärmespeicher und ein anderer Teil als Wasserstoffspeicher ausgebildet sein. Die unterschiedlichen Module können beispielsweise abwechselnd angeordnet sein oder aber auch in Blöcken gleichartiger Speichermodule. Die Kombination von Wärme-Speichermodulen und Wasserstoff-Speichermodulen in einer Speichervorrichtung hat den Vorteil, dass die von dem Metallhydrid beim Befüllen freigesetzte Wärme in den Wärme-Speichermodulen innerhalb der Speichervorrichtung gespeichert werden kann und später den Wasserstoff-Speichermodulen wieder zugeführt werden kann, um den Wasserstoff aus dem Metallhydrid auszutreiben. Der Wärmetransfer erfolgt dabei über einen durch die Wärmeträgerkanäle und zumindest eine Wärmeträger-Anschlussleitung strömenden Wärmeträger.

Die zumindest eine Speicher-Anschlussleitung ist bevorzugt als eine zu den Speichermodulen externe Verrohrung ausgebildet, welche die Speicherbehälter der Speichermodule verbindet. Diese Verrohrung erstreckt sich vorzugsweise seitlich an den Speichermodulen entlang. Die Verrohrung wird zweckmäßigerweise nach der Montage der Speichermodule zu einem Modulstapel, d.h. nach dem Aufeinanderstapeln angebracht.

Gemäß einer weiter bevorzugten Ausführungsform weisen die Speicherbehälter jeweils zumindest zwei Leitungsanschlüsse auf, einen z.B. Einlass- und einen Auslassanschluss, welche vorzugsweise an entgegengesetzten bzw. voneinander abgewandten Seiten des Speicherbehälters angeordnet sind. In einem solchen Fall können zumindest zwei Speicher-Anschlussleitungen vorgesehen sein, z.B. eine Einlassleitung, welche die Einlassanschlüsse miteinander verbindet und eine Auslassleitung, welche die Auslassanschlüsse miteinander verbindet.

Das Metallhydrid ist bevorzugt in Form von Blöcken mit zwischen diesen angeordneten Abstandselementen in dem zumindest einen Speicherbehälter angeordnet, kann aber auch als Granulat oder Pulver eingebracht werden. Diese Blöcke werde in dem Speicherbehälter angeordnet, bevor dieser verschlossen wird, beispielsweise vor dem Aufsetzen der letzten Seitenwandung bzw. Wandfläche, welche dann mit der Umfangswandung verschweißt wird. Die Abstandselemente dienen dazu, die Metallhydrid-Blöcke definiert im Inneren des Speicherbehälters zu platzieren, bevor der Speicherbehälter das erste Mal mit Wasserstoff beaufschlagt bzw. gefüllt wird. Bei der ersten Einlagerung von Wasserstoff dehnt sich das Metallhydrid aus. Um eine gleichmäßige Ausdehnung zu gewährleisten, sind bei der Montage Abstände vorgesehen, welche durch die Abstandelemente sichergestellt werden. Die Abstandelemente und die Blöcke sind vorzugsweise so ausgebildet und dimensioniert, dass das Metallhydrid nach der ersten Aufnahme von Wasserstoff den Speicherbehälter vollständig ausfüllt, d.h. insbesondere an den Innenseiten der beschriebenen Wandflächen des Speicherbehälters zur Anlage kommt, sodass ein optimaler Wärmeübergang über die Wandflächen in das Innere des Metallhydrids gewährleistet wird. Gleichzeitig soll aber eine weitere Ausdehnung, welche zu einer Verformung der Speicherbehälter führen würde, vorzugsweise vermieden werden, damit beispielsweise auch die Wärmeträgerkanäle nicht verformt oder beschädigt werden.

Zwischen den benachbarten bzw. aneinander angrenzenden Speichermodulen können in dem Modulstapel jeweils Zwischenplatten angeordnet sein. Diese können eine gleichmäßige Kraftübertragung zwischen den einzelnen Speichermodulen und eine spielfreie Anlage der Speichermodule und/oder eine thermische Entkopplung zwischen den Speichermodulen gewährleisten. Die Zwischenplatten können aus einem wärmedämmenden Material und/oder einem elastischen Material, welches Verformungen, beispielsweise aufgrund von Wärmedehnungen aufnehmen kann, ausgebildet sein. Zur thermischen Entkopplung bzw. Wärmedämmung zwischen benachbarten Speichermodulen sind die Zwischenplatten vorzugsweise aus einem Material mit entsprechenden Dämmeigenschaften bzw. mit schlechter Wärmeleitfähigkeit, z.B. Kunststoff, gefertigt.

Die gesamte Speichervorrichtung kann gemäß einer weiteren bevorzugten Ausführungsform eingehaust sein. Eine die Speichervorrichtung mit ihren Speichermodulen umgebende Einhausung kann besonders bevorzugt eine Wärmedämmung aufweisen bzw. von einer Wärmedämmung gebildet sein. Als Wärmedämmung kann jedes für den Einsatzzweck geeignete Dämmmaterial, beispielsweise Stein- oder Mineralwolle oder ein geschäumtes Kunststoffmaterial verwendet werden.

Nachfolgend wird die Erfindung beispielhaft anhand der beigefügten Figuren beschrieben. In diesen zeigt:

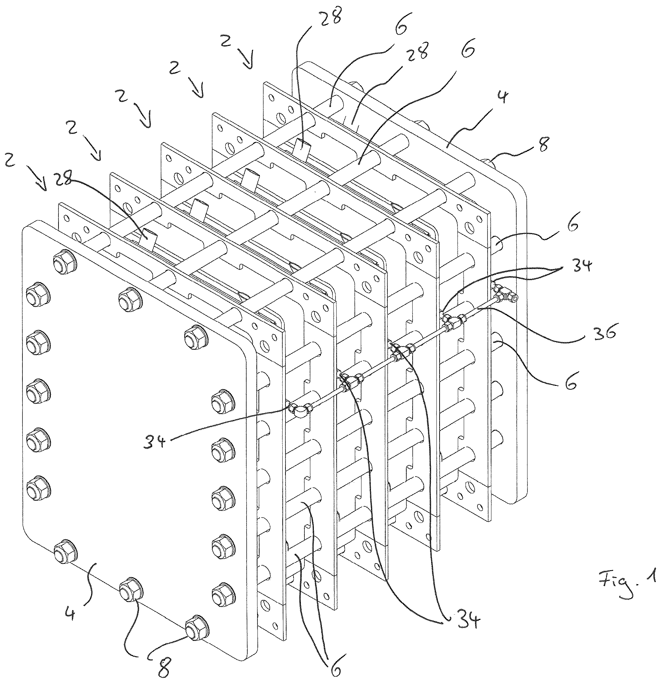

- Figur 1: eine perspektivische Ansicht einer erfindungsgemäßen Speichervorrichtung,

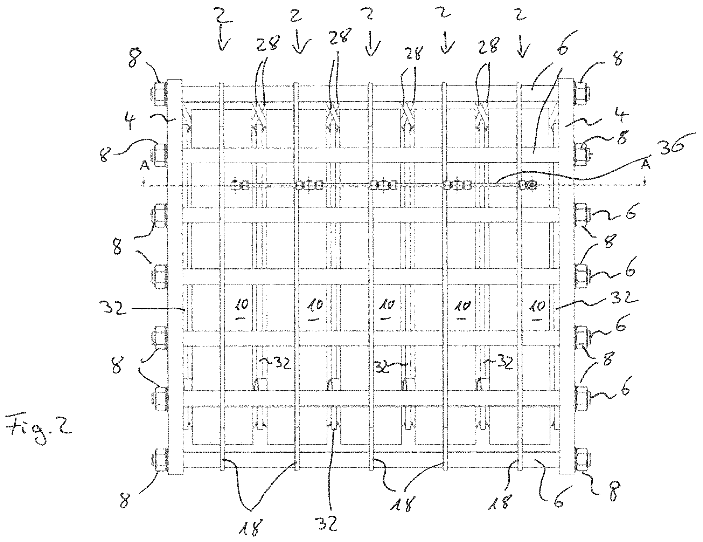

- Figur 2: eine Seitenansicht der Speichervorrichtung gemäß Figur 1,

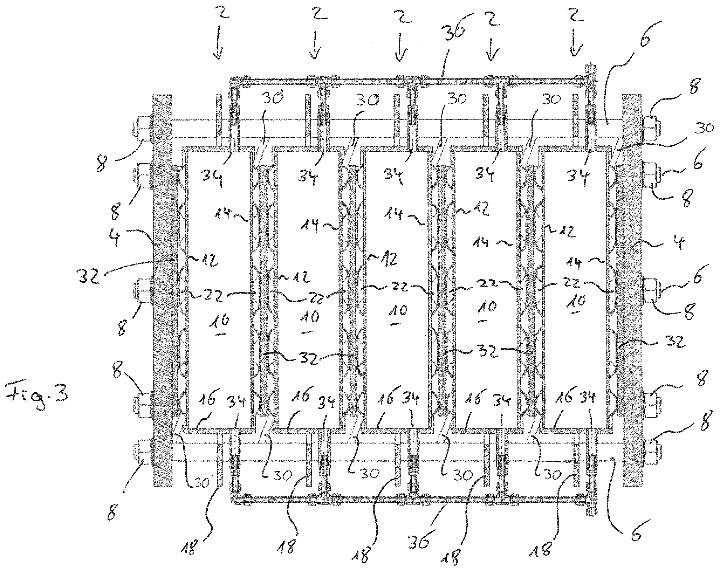

- Figur 3: eine Schnittansicht entlang der Linie A-A in Figur 2,

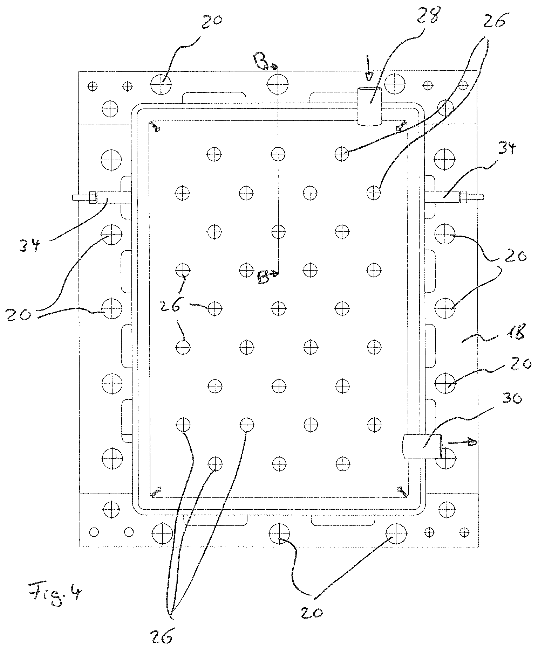

- Figur 4: eine Draufsicht auf ein Speichermodul der Speichervorrichtung, und

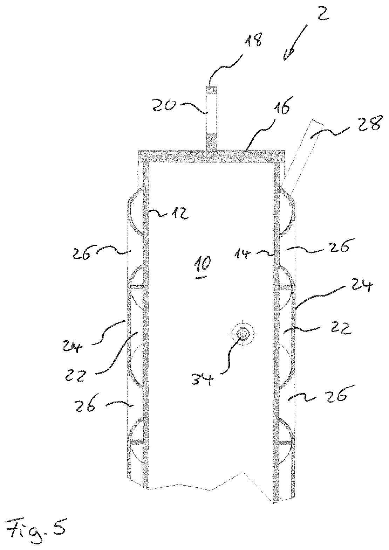

- Figur 5: eine Schnittansicht entlang der Linie B-B in Figur 4.

Die erfindungsgemäße Speichervorrichtung ist als WasserstoffSpeicher ausgebildet und weist in diesem Fall fünf Speichermodule 2 auf. Die Speichermodule 2 sind parallel zueinander aufeinander gestapelt und liegen zwischen zwei Lagerplatten 4, welche über Stangen bzw. Bolzen 6 miteinander verbunden sind. Die Stangen 6 bilden Spannelemente und erstrecken sich durch die Lagerplatten 4 hindurch. An den Seiten der Lagerplatten 4, welche den Speichermodulen 2 abgewandt sind, sind die Stangen 6 durch Muttern 8 verschraubt. So wird über die Muttern 8 und die Stangen 6 eine Druckkraft zwischen den Platten 4 aufgebracht, welche die Speichermodule 2 in Anlage halten und der in den Speichermodulen 2 auftretenden Druckkräfte entgegenwirken.

Die Speichermodule 2 sind identisch ausgebildet und weisen jeweils einen Speicherbehälter 10 auf, welcher im Fall des Wasserstoffspeichers mit einem Metallhydrid gefüllt ist, welches hier in den Figuren nicht gezeigt ist. Die Speicherbehälter 10 weisen eine Außenwandung auf, welche durch zwei voneinander beabstandete parallele Wandflächen 12 und 14 gebildet wird. Die Wandflächen 12 und 14 sind als Bleche ausgebildet und in ihrem Umfangsbereich durch eine Umfangswandung 16 miteinander verbunden. Die Umfangswandung 16 kann als gebogener Blechstreifen, welcher zu einem geschlossenen Ring geformt und verschweißt ist, gebildet sein. Alternativ kann er durch mehrere verschweißte Blechelemente ausgebildet sein. Die Wandflächen 12 und 14 sind mit der Umfangswandung 16 ebenfalls verschweißt. Die so gebildeten Speicherbehälter 10 sind in einen umgebenden Rahmen 18 eingesetzt, welcher ebenfalls aus einem Blechbauteil gefertigt sein kann. Der Rahmen 18 kragt somit quer der Umfangswandung aus. Der Rahmen 18 weist Durchgangslöcher 20 auf, durch welche sich die Stangen 6 erstrecken. So werden die Rahmen 18 auf den Stangen 6 geführt bzw. in Querrichtung zu den Stangen positioniert. Dies ermöglicht es die Speichermodule 2 auf die Stangen 6 aufzufädeln, sodass sie definiert zwischen den Lagerplatten 4 positioniert werden. Die Rahmen 18 sind jeweils an der angrenzenden Umfangswandung 16 angeschweißt, könnten aber auch in anderer Weise kraftübertragend mit der Umfangswandung 16 verbunden sein, z.B. durch Verschrauben oder Vernieten. Die Rahmen 18 dienen bevorzugt als Tragstrukturen für die Speichermodule 2, indem die einzelnen Rahmen auf einer Aufstandsfläche oder Lagerelement aufstehen und somit die Gewichtskraft des zugehörigen Speichermoduls 2 direkt auf die Aufstandsfläche oder das Lagerelement übertragen.

An den Außenseiten, d.h. den dem Innenraum des Speicherbehälters 10 abgewandten Seiten, der Wandflächen 12 und 14 sind in jedem der Speichermodule 2 Wärmeträgerkanäle 22 ausgebildet. Die Wärmeträgerkanäle 22 sind zwischen den Wandflächen 12 bzw. 14 und einer von außen angesetzten Kanalwandung 24 definiert. Die Kanalwandungen 24 sind als Blechformteile ausgebildet und so geformt, dass sie sich in ihrer Grunderstreckung im Wesentlichen parallel zu den Wandflächen 12 und 14 erstrecken. Sie sind so geformt, dass sie in einzelnen Bereichen, d.h. im Großteil ihrer Erstreckung von den Wandflächen 12 und 14 beabstandet sind, sodass Freiraume gebildet werden, welche flächige Wärmeträgerkanäle 22 definieren. Am Außenumfang sind die Kanalwandungen 24 so geformt, dass sie mit den Wandflächen 12 und 14 in Kontakt treten und dort dicht verschweißt sind. Im Mittelbereich weisen die Kanalwandungen 24 nach innen, d.h. zu den Wandflächen 12 und 14 hin gerichtete Einbuchtungen 26 auf, deren Böden als Löcher ausgebildet sind, wobei die Umfangswandungen der Einbuchtungen 26 mit der angrenzenden Wandfläche 12, 14 in Kontakt kommen und ebenfalls dicht verschweißt sind. Die Wärmeträgerkanäle 22 weisen jeweils einen Einlass 28 und einen Auslass 30 auf, welche an entgegengesetzten Seiten der Wärmeträgerkanäle 22 angeordnet sind. Die Einlässe 28 können mit einer Einlassleitung und die Auslässe 30 mit einer Auslassleitung zur Zu- und Abfuhr eines flüssigen Wärmeträgers verbunden werden. Der Wärmeträger kann dann durch die Wärmeträgerkanäle 22 strömen, um die Speicherbehälter 10 zu temperieren, insbesondere bei der Wasserstoffaufnahme zu kühlen und zum Austreiben des Wasserstoffes zu erwärmen. Wesentlich ist dabei, dass die entsprechenden Anschlussleitungen und Verbindungen der Wärmeträgerkanäle 22 der einzelnen Speichermodule 2 außerhalb dieser Speichermodule 2 durch eine externe Verrohrung erfolgt, d.h. die Wärmeträgerkanäle 22 der einzelnen Speichermodule 2 beim Anordnen der Module nicht direkt miteinander verbunden werden.

Beim Anordnen der Speichermodule 2 kommen in diesem Ausführungsbeispiel die Kanalwandungen 24 benachbarter Speichermodule 2 nicht direkt miteinander in Anlage, sondern es sind Zwischenplatten 32 zwischen den einzelnen Speichermodulen 2 und auch zwischen den Speichermodulen 2 und den Lagerplatten 4 angeordnet. Diese dienen der thermischen Entkopplung der benachbarten Speichermodule 2 und sind dazu aus einem schlecht wärmeleitenden Material wie z.B. Kunststoff gefertigt. Bevorzugt kann das Material der Zwischenplatten 32 zusätzlich elastische Eigenschaften aufweisen und ermöglicht so eine gleichmäßige Kraftübertragung und kann beispielsweise Wärmedehnungen kompensieren.

Die Speicherbehälter 10 weisen ferner jeweils mindestens einen Leitungsanschluss 34 auf. In diesem Ausführungsbeispiel weist jeder der Speichermodule zwei Leitungsanschlüsse 34 auf, welche an entgegengesetzten Seiten der Umfangswandung 16 ausgebildet sind. Die Leitungsanschlüsse 34 dienen zum Einleiten und Ausleiten von Wasserstoff aus dem Speicherbehälter 10. Die einzelnen Leitungsanschlüsse 34 sind außerhalb der Speichermodule 2, d.h. außerhalb der Speicherbehälter 10 jeweils mit einer Speicheranschlussleitung 36 verbunden. D.h. auch hier ist eine externe Verrohrung vorgesehen, welche die Verbindung zwischen den Speicherbehältern 10 erst nach dem Stapeln bzw. Anordnen der Module herstellt. D.h. es gibt keine direkte Verbindung zwischen den Speicherbehältern 10.

Die beschriebene modulare Speichervorrichtung kann anstatt als Wasserstoffspeicher in leichter Abwandlung auch als Wärmespeicher, insbesondere Latentwärmespeicher verwendet werden. In einem solchen Fall würden die Leitungsanschlüsse 34 dazu dienen, die Speicherbehälter 10 mit einem Wärmespeichermaterial, insbesondere einem Latentwärmespeichermaterial, beispielsweise Wachs oder ähnlichem, zu befüllen. Anschließend werden die Leitungsanschlüsse 34 verschlossen, z.B. mittels Stopfen. Diese Verschlüsse können dauerhaft oder auch lösbar ausgebildet sein. Die könnte auch über die Speicheranschlussleitungen 36 erfolgen, welche im Anschluss verschlossen oder entfernt wird. Alternativ könnte auf die Speicheranschlussleitungen 36 für die Anwendung als Wärmespeicher verzichtet werden und die Speicherbehälter 10 beispielsweise einzeln befüllt werden. Die Wärmezu- und - abfuhr zu dem Wärmespeicher erfolgt durch einen flüssigen Wärmeträger, welcher durch die Wärmeträgerkanäle 22 geleitet wird.

In einer besonderen Ausführungsform der Speichervorrichtung können Wasserstoffspeicher und Wärmespeicher kombiniert werden, so dass der Wärmespeicher die bei der Aufnahme des Wasserstoff in dem Metallhydrid entstehende Wärme speichert und später zum Austreiben des Wasserstoffs wieder bereitstellt. Dies kann in der Weise erfolgen, dass zumindest eine als Wasserstoffspeicher ausgebildeten Speichervorrichtung mit zumindest einer als Wärmespeicher ausgebildeten Speichervorrichtung in Kombination betrieben wird. In einer besonderen Ausführungsform ist es jedoch auch möglich innerhalb einer Speichervorrichtung einen Teil der Speichermodule 2 als Wasserstoffspeicher und einen anderen Teil der Speichermodule 2 als Wärmespeicher auszubilden. Dabei können die unterschiedlichen Speichermodule 2 beispielsweise abwechselnd oder auch jeweils zu Blöcken gleichartiger Speichermodule 2 kombiniert angeordnet werden.

### Bezugszeichenliste

- 2: Speichermodule
- 4: Lagerplatte
- 6: Stangen
- 8: Muttern
- 10: Speicherbehälter
- 12, 14: Wandfläche
- 16: Umfangswandung
- 18: Rahmen
- 20: Durchgangslöcher
- 22: Wärmeträgerkanäle
- 24: Kanalwandung
- 26: Einbuchtungen
- 28: Einlass
- 30: Auslass
- 32: Zwischenplatten
- 34: Leitungsanschlüsse
- 36: Speicheranschlussleitung

## Patentansprüche

1. Speichervorrichtung mit mehreren aneinander gestapelten Speichermodulen (2),
wobei die Speichermodule (10) unabhängig voneinander ausgebildet sind und jeweils ein geschlossenes Speichervolumen aufweisen, die Speichermodule (2) jeweils zumindest einen Speicherbehälter (10) und jeweils zumindest einen an eine Außenwandung des Speicherbehälters (10) angrenzenden Wärmeträgerkanal (22) aufweisen, wobei die Wärmeträgerkanäle (22) der mehreren Speichermodule (2) über zumindest eine Wärmeträger-Anschlussleitung miteinander verbunden sind, **dadurch gekennzeichnet, dass** der zumindest eine Wärmeträgerkanal (22) durch eine Wandfläche (12, 14) der Außenwandung eines zugehörigen Speicherbehälters (10) und eine mit der Wandfläche (12, 14) verbundene Kanalwandung (24) begrenzt wird, welche von einem Blechelement gebildet ist, welches mit der Wandfläche (12, 14) dichtend verbunden ist.

2. Speichervorrichtung nach Anspruch 1, **dadurch gekennzeichnet, dass** die zumindest eine Wärmeträger-Anschlussleitung als eine zu den Speichermodulen (2) externe Verrohrung ausgebildet ist, welche die Wärmeträgerkanäle (22) der Speichermodule (2) verbindet.

3. Speichervorrichtung nach Anspruch 1 oder 2, **dadurch gekennzeichnet, dass** die Außenwandung der Speicherbehälter (10) jeweils eine erste Wandfläche (12) und eine beabstandete, sich parallel erstreckende zweite Wandfläche (14) aufweist, wobei der zumindest eine Wärmeträgerkanal (22) an die erste und/oder die zweite Wandfläche (12, 14) angrenzt.

4. Speichervorrichtung nach Anspruch 3, **dadurch gekennzeichnet, dass** die Speicherbehälter (10) jeweils einen ersten Wärmeträgerkanal (22), der an die erste Wandfläche (12) angrenzt, und einen zweiten Wärmeträgerkanal (22), der an die zweite Wandfläche (14) angrenzt, aufweisen.

5. Speichervorrichtung nach einem der vorangehenden Ansprüche, **dadurch gekennzeichnet, dass** der zumindest eine Wärmeträgerkanal (22) sich flächig entlang zumindest einer Wandfläche (12, 14) der Außenwandung des zugehörigen Speicherbehälters (10) erstreckt.

6. Speichervorrichtung nach einem der vorangehenden Ansprüche, **dadurch gekennzeichnet, dass** die Kanalwandung (24) von einem Blechelement gebildet ist, welches mit der Wandfläche (12, 14) verschweißt ist.

7. Speichervorrichtung nach einem der vorangehenden Ansprüche, **dadurch gekennzeichnet, dass** zumindest eine Wandfläche (12, 14) der Außenwandung und vorzugsweise zumindest die Wandflächen (12, 14), an welchen die Wärmeträgerkanäle (22) angrenzen, Blechteile sind.

8. Speichervorrichtung nach einem der vorangehenden Ansprüche, **dadurch gekennzeichnet, dass** die aneinander gestapelten Speichermodule (2) zwischen zwei Lagerelementen (4) angeordnet sind, welche über Spannelemente (6) miteinander verbunden sind, die sich vorzugsweise seitlich der Speichermodule (2) erstrecken.

9. Speichervorrichtung nach einem der vorangehenden Ansprüche, **dadurch gekennzeichnet, dass** im Inneren des zumindest einen Speicherbehälters (10) zumindest eines Speichermoduls (2) ein Wärmespeichermaterial angeordnet ist.

10. Speichervorrichtung nach einem der Ansprüche 1 bis 9, **dadurch gekennzeichnet, dass** im Inneren des zumindest einen Speicherbehälters (10) zumindest eines Speichermoduls (2) ein Metallhydrid, welches zum Speichern von Wasserstoff ausgebildet ist, angeordnet ist.

11. Speichervorrichtung nach einem der vorangehenden Ansprüche, **dadurch gekennzeichnet, dass** die Speicherbehälter (10) jeweils zumindest einen Leitungsanschluss (34) aufweisen und dass die Leitungsanschlüsse (34) der Speicherbehälter (10) der mehreren Speichermodule (2) vorzugsweise über zumindest eine Speicher-Anschlussleitung (36) miteinander verbunden sind.

12. Speichervorrichtung nach Anspruch 11, **dadurch gekennzeichnet, dass** die zumindest eine Speicher-Anschlussleitung (36) als eine zu den Speichermodulen (2) externe Verrohrung ausgebildet ist, welche die Speicherbehälter (10) der Speichermodule (2) verbindet.

13. Speichervorrichtung nach einem der Ansprüche 10 bis 12, **dadurch gekennzeichnet, dass** das Metallhydrid in Form von Blöcken mit zwischen diesen angeordneten Abstandelementen in dem zumindest einen Speicherbehälter (10) angeordnet ist, wobei die Abstandelemente und die Blöcke vorzugsweise derart ausgebildet und dimensioniert sind, dass das Metallhydrid nach einer ersten Aufnahme von Wasserstoff den Speicherbehälter (10) vollständig ausfüllt.

14. Speichervorrichtung nach einem der vorangehenden Ansprüche, **dadurch gekennzeichnet, dass** zwischen benachbarten Speichermodulen (2) eine Zwischenplatte (32) angeordnet ist.

## Claims

1. A storage device with multiple storage modules (2) that are stacked against one another, wherein the storage modules (10) are realized independently of one another and respectively have a closed storage volume, wherein the storage modules (2) respectively have at least one storage container (10) and at least one heat carrier channel (22) that borders on an outer wall of the storage container (10), and wherein the heat carrier channels (22) of the multiple storage modules (2) are connected to one another by means of at least one heat carrier connecting line, **characterized in that** the at least one heat carrier channel (22) is delimited by a wall surface (12, 14) of the outer wall of an associated storage container (10) and a channel wall (24) that is connected to the wall surface (12, 14) and formed by a sheet metal element, which is connected to the wall surface (12, 14) in a sealing manner.

2. The storage device according to claim 1, **characterized in that** the at least one heat carrier connecting line is realized in the form of a piping that is external to the storage modules (2) and connects the heat carrier channels (22) of the storage modules (2).

3. The storage device according to claim 1 or 2, **characterized in that** the outer wall of the storage containers (10) respectively has a first wall surface (12) and a second wall surface (14) that is spaced apart from the first surface and extends parallel thereto, wherein the at least one heat carrier channel (22) borders on the first and/or the second wall surface (12, 14).

4. The storage device according to claim 3, **characterized in that** the storage containers (10) respectively have a first heat carrier channel (22) that borders on the first wall surface (12) and a second heat carrier channel (22) that borders on the second wall surface (14).

5. The storage device according to one of the preceding claims, **characterized in that** the at least one heat carrier channel (22) extends flatly along at least one wall surface (12, 14) of the outer wall of the associated storage container (10).

6. The storage device according to one of the preceding claims, **characterized in that** the channel wall (24) is formed by a sheet metal element that is welded to the wall surface (12, 14).

7. The storage device according to one of the preceding claims, **characterized in that** at least one wall surface (12, 14) of the outer wall and preferably at least the wall surfaces (12, 14), on which the heat carrier channels (22) border, are sheet metal parts.

8. The storage device according to one of the preceding claims, **characterized in that** the storage modules (2), which are stacked against one another, are arranged between two bearing elements (4) that are connected to one another by means of tensioning elements (6), which preferably extend laterally of the storage modules (2).

9. The storage device according to one of the preceding claims, **characterized in that** a heat storage material is arranged in the interior of the at least one storage container (10) of the at least one storage module (2).

10. The storage device according to one of claims 1 to 9, **characterized in that** a metal hydride, which is designed for storing hydrogen, is arranged in the interior of the at least one storage container (10) of the at least one storage module (2).

11. The storage device according to one of the preceding claims, **characterized in that** the storage containers (10) respectively have at least one line connection (34), and **in that** the line connections (34) of the storage containers (10) of the multiple storage modules (2) preferably are connected to one another by means of at least one storage connecting line (36).

12. The storage device according to claim 11, **characterized in that** the at least one storage connecting line (36) is realized in the form of a piping that is external to the storage modules (2) and connects the storage containers (10) of the storage modules (2).

13. The storage device according to one of claims 10 to 12, **characterized in that** the metal hydride is arranged in the at least one storage container (10) in the form of blocks with spacer elements arranged between these blocks, wherein the spacer elements and the blocks preferably are realized and dimensioned in such a way that the metal hydride completely fills out the storage container (10) after a first absorption of hydrogen.

14. The storage device according to one of the preceding claims, **characterized in that** an intermediate plate (32) is arranged between adjacent storage modules (2).

## Revendications

1. Dispositif de stockage avec plusieurs modules de stockage (2) empilés près de l'autre, sachant que les modules de stockage (10) sont constitués indépendants l'un de l'autre et comportent respectivement un volume de stockage clos, les modules de stockage (2) comportent respectivement au moins un réservoir de stockage (10) et respectivement au moins un conduit de caloporteur (22) limitrophe d'une paroi extérieure du réservoir de stockage (10), sachant que les conduits de caloporteur (22) des nombreux modules de stockage (2) sont reliés entre eux par au moins un conduit de raccord de caloporteur, **caractérisé en ce qu'** au moins un conduit de caloporteur (22) est limité par une surface de paroi (12, 14) de la paroi extérieure d'un réservoir de stockage (10) correspondant et une paroi de conduit (24) reliée à la surface de paroi (12, 14), laquelle est formée par un élément en tôle, lequel est relié de façon étanche à la surface de paroi (12, 14).

2. Dispositif de stockage selon la revendication 1, **caractérisé en ce qu'**au moins un conduit de raccord de caloporteur est constitué sous la forme d'une tuyauterie externe aux modules de stockage (2), laquelle relie les conduits de caloporteur (22) des modules de stockage (2).

3. Dispositif de stockage selon la revendication 1 ou 2, **caractérisé en ce que** la paroi extérieure des réservoirs de stockage (10) comporte respectivement une première surface de paroi (12) et une deuxième surface de paroi (14) à distance, s'étendant parallèlement, sachant qu'au moins un conduit de caloporteur (22) est limitrophe à la première et/ou de la deuxième surface de paroi (12, 14).

4. Dispositif de stockage selon la revendication 3, **caractérisé en ce que** les réservoirs de stockage (10) comportent respectivement un premier conduit de caloporteur (22), qui est limitrophe à la première surface de paroi (12) et un deuxième conduit de caloporteur (22), qui est limitrophe à la deuxième surface de paroi (14).

5. Dispositif de stockage selon l'une quelconque des revendications précédentes, **caractérisé en ce qu'**au moins un conduit de caloporteur (22) s'étend en surface le long d'au moins une surface de paroi (12, 14) de la paroi extérieure du réservoir de stockage (10) correspondant.

6. Dispositif de stockage selon l'une quelconque des revendications précédentes, **caractérisé en ce que** la paroi de conduit (24) est formée par un élément en tôle, lequel est soudé à la surface de paroi (12, 14).

7. Dispositif de stockage selon l'une quelconque des revendications précédentes, **caractérisé en ce qu'**au moins une surface de paroi (12, 14) de la paroi extérieure et de préférence au moins les surfaces de paroi (12, 14), limitrophes des conduits de caloporteur (22), sont des pièces en tôle.

8. Dispositif de stockage selon l'une quelconque des revendications précédentes, **caractérisé en ce que** les modules de stockage (2) empilés l'un près l'autre sont disposés entre deux éléments de support (4), lesquels sont reliés entre eux par des éléments de serrage (6), qui s'étendent de préférence latéralement aux modules de stockage (2).

9. Dispositif de stockage selon l'une quelconque des revendications précédentes, **caractérisé en ce qu'**à l'intérieur d'au moins un réservoir de stockage (10) d'au moins un module de stockage (2) est disposé un matériau de stockage thermique.

10. Dispositif de stockage selon l'une quelconque des revendications 1 à 9, **caractérisé en ce qu'**à l'intérieur d'au moins un réservoir de stockage (10) d'au moins un module de stockage (2) est disposé un hydrure métallique, lequel est constitué pour stocker de l'hydrogène.

11. Dispositif de stockage selon l'une quelconque des revendications précédentes, **caractérisé en ce que** les réservoirs de stockage (10) comportent respectivement au moins un raccord de conduit (34) et **en ce que** les raccords de conduit (34) des réservoirs de stockage (10) des nombreux modules de stockage (2) sont reliés entre eux de préférence par au moins un conduit de raccord de stockage (36).

12. Dispositif de stockage selon la revendication 11, **caractérisé en ce qu'**au moins un conduit de raccord de stockage (36) est constitué sous la forme d'une tuyauterie externe aux modules de stockage (2), laquelle relie les réservoirs de stockage (10) des modules de stockage (2).

13. Dispositif de stockage selon l'une quelconque des revendications 10 à 12, **caractérisé en ce que** l'hydrure métallique sous la forme de blocs est disposé avec des éléments d'espacement disposés entre ceux-ci dans au moins un réservoir de stockage (10), sachant que les éléments d'espacement et les blocs sont de préférence constitués et dimensionnés de telle sorte que l'hydrure métallique remplit complètement le réservoir de stockage (10) après une première mise en place d'hydrogène.

14. Dispositif de stockage selon l'une quelconque des revendications précédentes, **caractérisé en ce que** une plaque intermédiaire (32) est disposée entre les modules de stockages voisins (2).
